# EUROPEAN PATENT APPLICATION

(11) **EP 0 896 379 A1**
(43) Date of publication of application: **10.02.1999**
(21) Application number: 98114662.4
(22) Date of filing: 04.08.1998
(51) Int. Cl.: H01M 8/02, H01M 8/24

(54) **Ion exchange membrane fuel cell with peripheral cooling system**

(30) Priority: 04.08.1997 IT MI971871
(71) Applicant: DE NORA S.P.A., 20134 Milano (IT)
(72) Inventor: Brambilla, Massimo, 20060 Bussero (MI) (IT); Ceruti, Valerio, 21016 Luino (VA) (IT)
(74) Representative: Kinzebach, Werner, Dr.

(57) **Abstract**

It is claimed a ion-exchange membrane fuel cell comprising elementary cells, each including two bipolar plates (17), a membrane (22), two electrodes (20,21) in intimate contact with the membrane, two conductive current collectors and two gaskets (18). The bipolar plates are cooled along the periphery only by means of a cooling medium which flows through side windows (12) in the gaskets. The material of the bipolar plates preferably have high thermal conductivity.

## Description

The proton-exchange membrane fuel cell (hereinafter referred to as PEMFC) is one of the most simple static systems for the direct conversion of the chemical energy into electrical energy. As no intermediate thermal step is required, the energy efficiency is particularly high, up to 60% referred to the lower heating value of the feed fuel. It is important to remember that the fuel may be hydrogen either pure or diluted by inert components, the oxidant may be air, enriched air or even pure oxygen and the operating temperature is about 70-80°C.

With respect to other types of fuel cells, such as phosphoric acid, molten carbonate or solid oxide fuel cells, the PEMFC offers the following advantages:
- high current density, resulting in high surface power density (up to 7 kW/m²)
- possible high volume and weight power density (up to 0.3 ÷ 0.5 kW/Kg or liter)
- tolerance to pressure unbalance between negative and positive poles
- quick start-up at low temperatures (0°C and even below)
- adaptability to sharp transients.

These characteristics make PEMFC the preferred choice for electric transport and stationary applications, such as continuity units, remote unattended power generation and co-generation when high temperature heat is not required.

Hydrogen, the only acceptable fuel for the PEMFC, may derive from different sources.

Usually hydrogen is readily available as a by-product or waste gas in electrolysis plants, typically chlor-alkali or chlorate plants and in commercial gas production units, as well as in plants using hydrogen, such as steel mills for bright annealing. Normally this hydrogen is burned in boilers or even vented to the atmosphere. Only in a few cases it is used as a high value chemical in reduction processes.

Hydrogen at various degrees of purity and dilution may be obtained by conversion of various materials, such as hydrocarbons and alcohols, in steam reforming and thermal or catalytic partial oxidation units. In this case, the raw hydrogen is diluted with carbon dioxide and it may contain impurities, such as hydrogen sulphide and/or carbon monoxide. A similar stream may be also available in refineries, as tail gas.

The advantages of the PEMFC are counterbalanced by some drawbacks, such as :
- the already mentioned low operating temperature, i.e. 60 - 80°C, which makes the PEMFC scarcely advantageous for large scale applications with co-generation of electric and thermal energy;
- poisoning of the catalyst by impurities, such as carbon monoxide, again due to the low operating temperature. Consequently the hydrogen-containing streams to be fed to the PEMFC must be previously pre-treated, for example by means of selective catalysts directed to reducing the impurity level to the ppm range, or by physical separation of the impurities, e.g. by means of palladium membranes or pressure swing absorption systems (PSA) or the like. This requirement obviously adds to the complexity of the system wherein the PEMFC is incorporated and therefore to the investment cost.

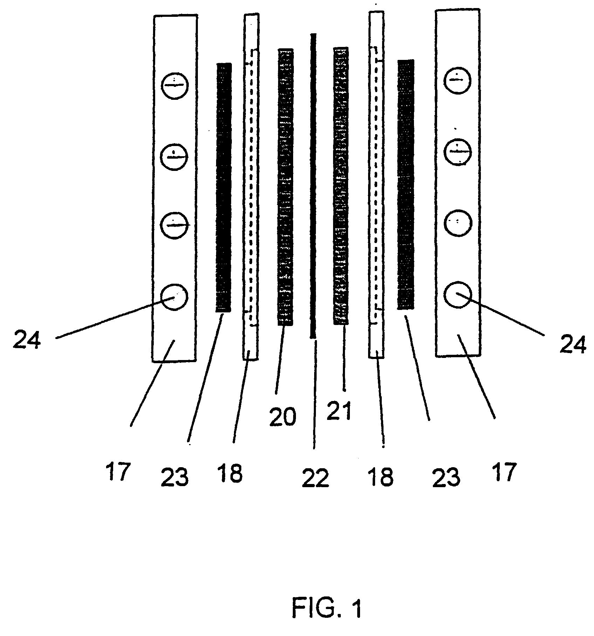

The typical structure of the elementary cell of the prior art is illustrated in fig. 1, and comprises bipolar plates 17, the ion exchange membrane 22, the electrodes 20 and 21 (usually bonded to the membrane under heat and pressure before installation, the assembly thus obtained being commercially known as MEA, membrane-electrode assembly), gaskets 18 providing for peripheral sealing, gas diffusers 23 (also defined as current collectors) made of porous conductive laminates, optionally made hydrophobic, directed to ensuring a homogeneous distribution of hydrogen and oxygen to the MEA and ejection of the water formed during operation, in the form of droplets, channels 24 for feeding and withdrawing the cooling medium, usually liquid, necessary to remove the heat generated during operation and amounting to about 40% of the heating value of hydrogen.

The elementary cells, as described in fig. 1, are assembled together to form a stack capable of supplying the necessary power output.

A good efficiency of the system requires the loss of electric power due to the ohmic drops localized at the various interfaces be minimized. This is achieved by keeping the stack under a suitable tightening pressure by means of end-plates and ties-rod. The pressure is usually comprised between 10-20 Kg/cm².

All market analyses show that to be commercially acceptable the PEMFC systems, that is membrane fuel cells provided with the necessary auxiliary equipment such a air compressor, hydrogen source, pressure, flow rate and temperature controls, central processing unit, must be offered at prices in the range of 500 - 1,000 US$ per kW of electric power.

These prices may be achieved in the case of a large scale, automated production, e.g. at last one thousand systems per year. As a consequence, all the components of a PEMFC must be suitably designed as to the geometrical form and construction material.

It may be easily understood that the bipolar plates schematized in fig. 1 do not meet the requirements for a low-cost production. In fact, the presence of channels for the cooling medium inside the structure makes the construction complicated. The mechanical work necessary for making the channels is very slow and extremely expensive, whereas casting suitable polymers or metal alloys is certainly more cost-effective but still does not permit to achieve the cost goals which would permit acceptable market prices, mainly due to the complicated equipment required and the production time which is still too long.

A further alternative is a bipolar plate made of two shells joined together so as to leave an internal space suitable for the cooling fluid circulation.

This solution requires a peripheral sealing obtained by welding, brazing or by means of suitable gaskets. Further, a good electrical continuity must be ensured between the surfaces of the two shells by a multiplicity of contact points. From this description, even if simplified, it should be clear that the two shell structure cannot be considered as satisfactory for a low cost production.

It is the main object of the present invention to overcome the prior art drawbacks by providing a bipolar plate structure particularly suitable for high speed production at very low costs, suitable for use in ion exchange membrane fuel cells.

The invention will be now described making reference to the figures, wherein:
fig. 2 is a front view of the bipolar plate of the invention provided with the cooling system along the two vertical sides
fig. 3 is a front view of a gasket for the bipolar plate of fig. 2.
fig. 4 is a lateral view of a unitary cell according to the invention
fig, 5 is a diagram illustrating the thermal gradient of the bipolar plate of the invention at different operating conditions
fig. 6 is a diagram showing the cell voltage behaviour as a function of the current output of the fuel cell stack of Example 1
fig. 7 is a diagram showing the voltage of each elementary cell of the stack of Example 1.

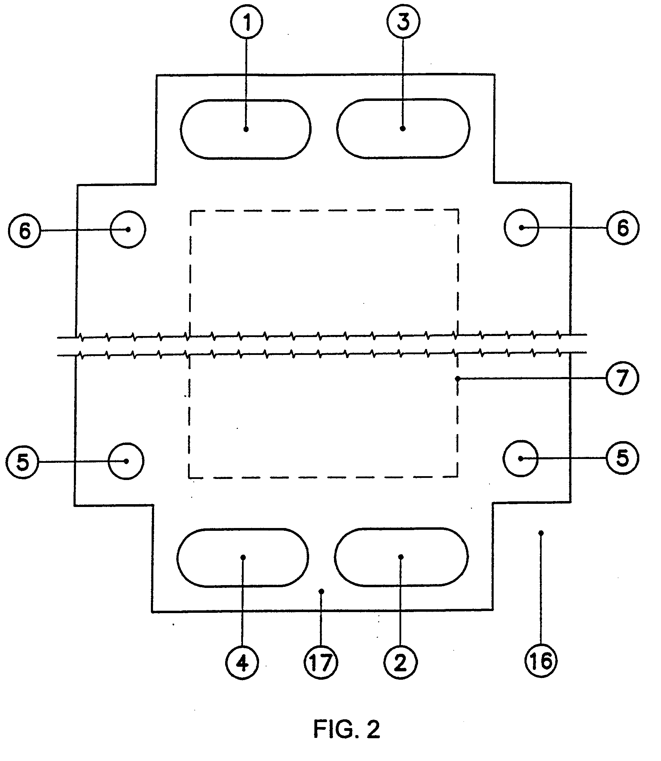

The bipolar plate of the invention consists of a thin planar sheet comprising holes necessary for feeding gases containing hydrogen and oxygen, and for withdrawing the exhausted gases and the produced water as well as for the inlet and outlet of the cooling fluid, the flow path of which is localized along the four sides or preferably along two opposite sides of the sheet. Making reference to fig. 2, the bipolar plate 17 comprises an inlet 1 for feeding a gas containing hydrogen and an outlet 2 for the removal of the exhausted gas, an inlet 3 for feeding the gas containing oxygen and an outlet 4 for releasing the depleted gas, inlets 5 for feeding the cooling fluid and outlets 6 for releasing the same. The area occupied by the electrode-membrane, package is identified by a dashed line. The hollow spaces 16 are directed to permitting the passage of tie-rods. The bipolar plate illustrated in fig. 2 may be obtained in a single step by cutting a thin sheet, also from a continuous coil, using a suitably shaped tool.

As the possible construction material, the technical and patent literature suggests the following alternatives :
- graphite
- graphite-polymer composites (US 4,339,322, Balko et al)
- stainless steel of the ferritic or austenitic types
- titanium
- aluminum and its alloys (US 5,482,792, Faita et al)

It is soon evident that graphite does not meet the requirements of the present invention due to its brittleness as there is no possibility of obtaining strips or thin sheets to be subjected to an automated cutting step. The graphite-polymer composite are also not sufficiently strong and undergo frequent fractures during the cutting step. As a matter of fact commercial polymers suitable for an automatic production are available on the market but their electrical conductivity is too low and thus the ohmic drops caused by the current flow are unacceptable as they would penalize the current efficiency of the fuel cell.

Conversely all metallic materials are suitable for the automatic cutting operation, have a good electrical conductivity and may be considered as potential candidates for producing the bipolar plates of the invention.

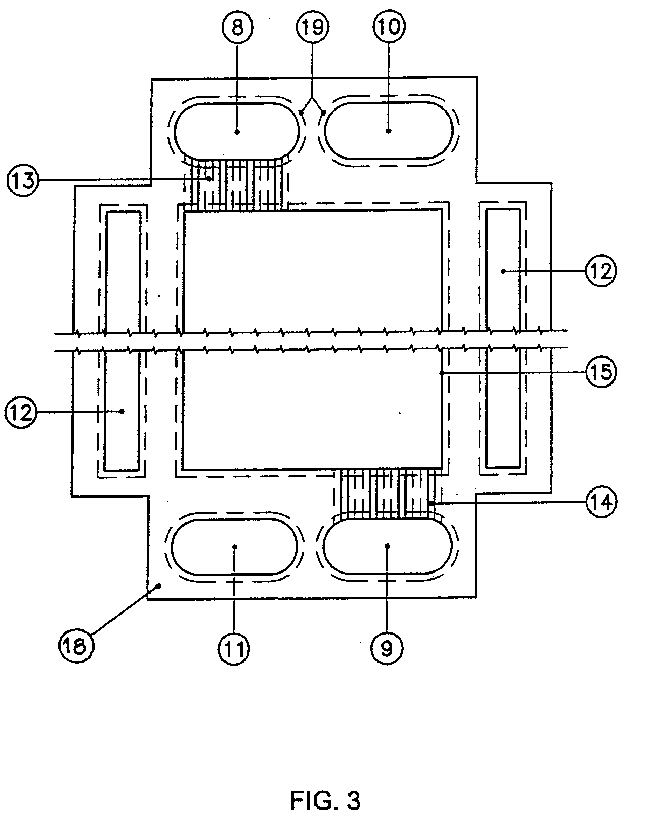

Fig. 3 illustrates a gasket 18 to be coupled to the bipolar plate of the invention, which comprises holes 8 and 9 with the relevant distribution channels 13, 14, and ridges 19 (dashed line), for distributing to the negative pole of each elementary cell the hydrogen- containing gas and for releasing the exhausted gas, holes 10 and 11, also provided with ridges 19 (dashed line) for the longitudinal flow of both the oxygen containing gas and the depleted gas, windows 12 for the circulation of the cooling fluid, with ridges (dashed line) to avoid leaks to the outside, internal hollow space 15 directed to house the electrodes and the membrane not shown in the figure for simplicity sake, also provided with ridges to ensure gas sealing towards the outside.

It must be noted that the gasket represented in fig. 3 is symmetrical with respect to the vertical axis. This permits to use the same gasket also for feeding the oxygen-containing gas simply by a 180° rotation. In this case the holes 8 and 9 with distribution channels provide for feeding to each unitary cell of the oxygen-containing gas and releasing the depleted gas, while holes 10 and 11 provide for the longitudinal flow of both the gas containing hydrogen and the exhausted gas.

While the electrodes have exactly the same dimensions as the free area 15, the membrane is slightly larger and therefore is sealed between the two adjacent gaskets without any possibility of lateral sliding.

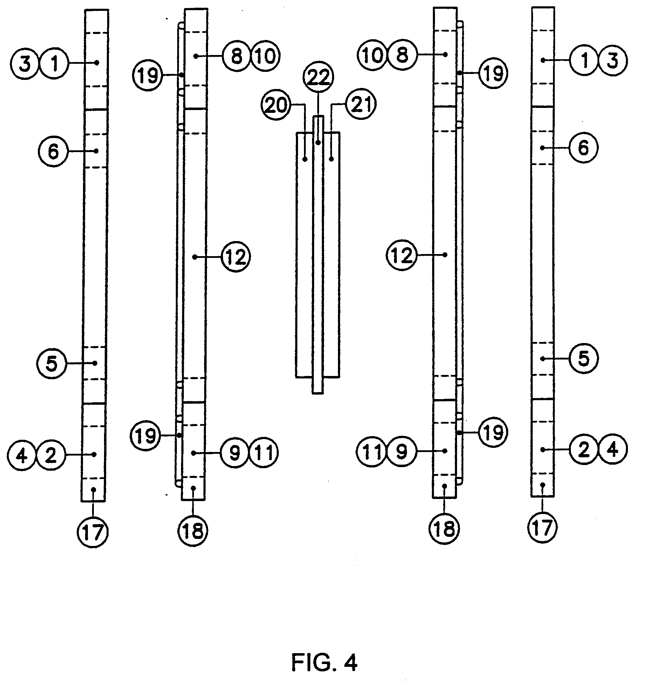

This will be soon apparent from fig. 4, wherein the reference numerals of fig. 2 and 3 have been used to define the same elements. As shown in fig. 4, the electrodes 20 and 21, which are fed with gas containing oxygen and hydrogen respectively, are in direct contact with the membrane 22. When the various components of an elementary cell are pressed together, longitudinal channels are formed which permit flow of the feed gases and release of both the exhausted gases and the produced water by superimposing holes 1, 3 and 8, 10 and holes 2, 4 and 9, 11. The longitudinal channels for feeding the oxygen-containing gas and releasing the residual gases, formed by superimposing holes 1, 8 and 2, 9 are connected by means of distributors 13 and 14 with the electrodes 20, while the longitudinal channels for feeding the gas containing hydrogen and releasing the residual gases, formed by superimposing holes 3, 10 and 4, 11, are connected by similar distributors to electrodes 21.

The cooling medium is fed through the channels formed by coupling holes 5 and windows 12, flows through the space delimited by each window 12 contacting the shed of each bipolar plate 17 and is released through the channels formed by superimposing holes 6 and windows 12. To increase the heat exchange, in particular when the cooling fluid is gaseous, such as air, it proved useful providing that part of the sheet of bipolar plate 17 between holes 5 and windows 6 with undulations or fins formed while cutting the bipolar plate out of the starting sheet, without affecting the economics of the production cycle.

Suitable cooling fluids are demi water or organic liquids having a low viscosity.

Suitable materials for producing the bipolar plates of the invention to be used in fuel cells for a long term and stable performance must be selected taking into account the thermal conductivity, which may vary within very broad limits, as shown in the following table.

Thermal conductivity (W/m °C) of metallic materials suitable for automated production of bipolar plates

| | |
|---|---|
| austenitic stainless steels | 16 |
| ferritic stainless steels | 26 |
| titanium | 17 |
| aluminum and its alloys | 200 |

Usually the thermal conductivity is not critical for bipolar plates of the prior art. In fact heat is removed perpendicularly to the plate wall through a rather reduced thickness and thus with limited thermal gradients.

Conversely, thermal conductivity is a key factor for the bipolar plates of the invention, where cooling takes place in the peripheral area.

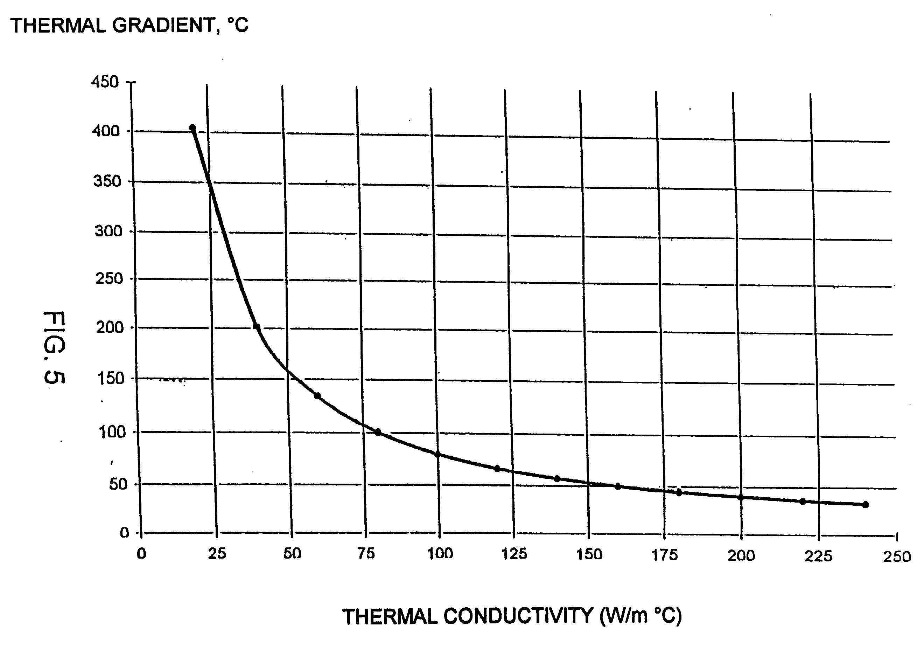

Fig. 5 shows the thermal gradient calculated for the bipolar plate of the invention as a function of the thermal conductivity of the metal used for the construction based on the assumption that the length and thickness of the bipolar plate be respectively 20 and 0.2 cm, at a current density of 3500 Ampere/m² and a voltage for each elementary cell of 0.7 Volt (corresponding to an amount of heat to be removed of 40% of the lower heating value of the consumed hydrogen) and with a temperature of the cooling fluid of 50°C.

As above 100°C the membrane is easily subjected to dehydration which strongly lowers the electrical conductivity, the maximum gradient corresponding to the maximum temperature localized in correspondence of the central axis of the plate, cannot exceed 50°.

It has been found that this result may be obtained with a thermal conductivity of the metal indicatively higher than 100 W/m °C.

Therefore aluminum and its alloys are particularly suitable. Materials with a lower thermal conductivity, such as stainless steels, even of the ferritic type, and titanium require bipolar plates with a width limited to a few centimeters, to maintain the maximum gradient to 50°C. Therefore these materials are less practical for use in fuel cells, even if still usable.

The problem of the limited width could be solved by increasing the thickness. However, there am limit values connected to the need of both producing the plates by simple cutting of sheets as well as not increasing the stack weight and the overall cost. As this limit value is probably about 0.3 cm, the width of the bipolar plates of the invention made of stainless steel or titanium would still be small. The width could also be increased by reducing the current density, but this would be unacceptable as it would make the fuel cell too cumbersome. The use of other metals having a higher electrical conductivity than stainless steel and titanium, such as carbon steel, nickel and copper, has been considered but excluded for corrosion problems. It has been observed that corrosion, beside causing in very strict times perforation of the plate, which have a rather reduced thickness, further releases metal ions capable of blocking the membrane and therefore badly affecting its electrical conductivity. In the case of aluminum and its alloys this problems is absent or negligible as demonstrated by long term operation of fuel cells with bipolar plates made with these materials.

The lower operating temperature along the lateral portions of the bipolar plate is a positive factor. In fact it involves a lower current density in an area where the oxygen-containing gas may be moderate and further helps in preserving the mechanical characteristics of the gasket in the long run.

During operation aluminum and its alloys become coated with a low-conductivity oxide film which increases the contact resistance between the bipolar plate and the membrane-electrode assembly and therefore decreases the electric efficiency of the fuel cell. This problem is addressed and solved in US 5,482,792, which describes the use of a current collector to be interposed between the bipolar plate and the electrodes, characterized by surfaces provided with asperities providing a permanent good electrical contact.

The following examples refer to fuel cell stacks assembled with the bipolar plates of the invention, made of aluminum or its alloys, and equipped with the current collector described in US 5,482,792.

### EXAMPLE 1

A fuel cell stack was assembled including 8 elementary cells comprising:
- 9 bipolar plates made of 99.9% aluminum and designed, as illustrated in fig. 2, with an active area (7 in fig. 2), dimensions of 15 x 15 cm and a thickness of 1 cm;
- 16 gaskets as illustrated in fig. 3, with an internal available space (15 in fig. 3) of 15 x 15 cm and a thickness of 0.2 cm. The holes for the circulation of the gases containing hydrogen and oxygen, the distribution channels, the internal available space and the windows for the cooling liquid now were provided with ridges having a thickness of 0.02 cm. The construction material was a thermoplastic elastomer (Hytrel®, commercialized by Du Pont, USA) suitable for injection molding;
- 16 ELAT™ electrodes supplied by E-TEK Inc., USA, with a catalyst consisting of carbon-supported platinum in a concentration of 1 mg/cm²;
- 8 Nafion® 117 membranes supplied by Du Pont, USA;
- 16 current collectors (23 in fig. 1), made of a reticulated material as described in Example 1 of US 5,482,792 having a thickness of 0.2 cm.

The various components were tightened between two end plates, 2 cm thick, made of Anticorodal 100 aluminum alloy, by means of tie-rods, in order to obtain a contact pressure of 15 Kg/cm².

The cooling medium was demi water with an inlet temperature of 50°C and an outlet temperature of 60°C.

The fuel cell was fed with pure hydrogen and air with water vapor added to reach a relative humidity of 60%. The inlet gas temperature was 60°C, while the air pressure was 3, 4 and finally 5 bar (abs). The hydrogen pressure was maintained about 0.2 bar higher than that of air.

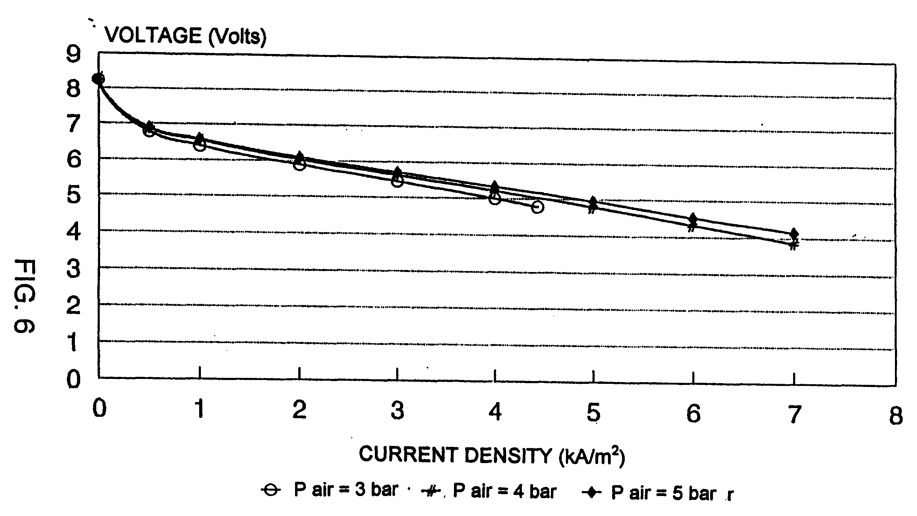

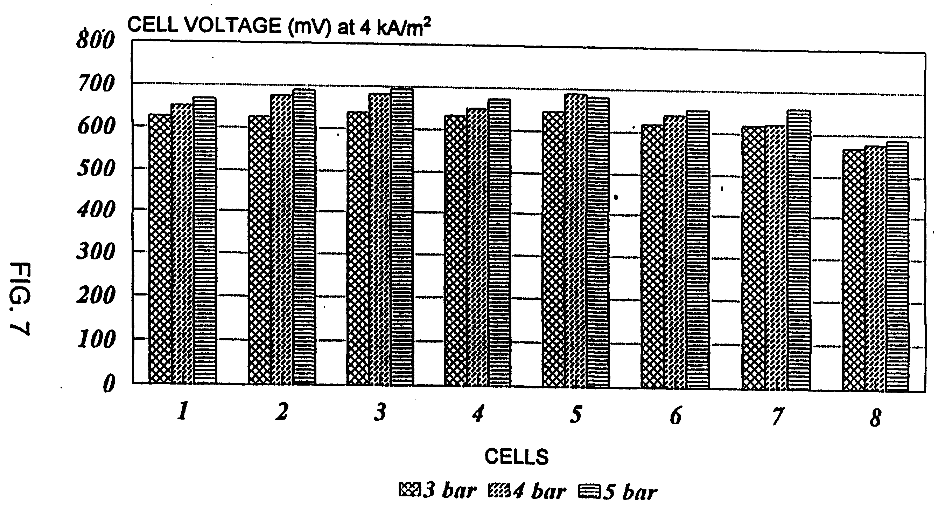

Fig. 6 shows the cell voltage behaviour as a function of the current output, while fig. 7 shows the voltage of each elementary cell at the current density of 400 Ampere/m². Fig. 7 dearly indicates that the elementary cells substantially operated at the same voltage, to demonstrate the reproducible behaviour of the device of the invention. Only the two terminal cells (no. 1 and no. 8) shows a slightly lower value clearly due to the higher thermal dispersion, which involves a slightly lower operating temperature.

The cell was operated intermittently for a total of 680 hours without any appreciable decay of the performances.

### EXAMPLE 2

For comparison pulses a fuel cell made of 8 unitary cells was assembled using the same components of Example 1 with the exception of the bipolar plates, which ere obtained by pressure die-casting of aluminum-silicon alloy, UNI 4514 type.

The bipolar plates had a thickness of 5 mm and incorporated a channel for the demi water flow (24 in fig. 1).

The fuel cell of this example has to be considered as representative of the prior art, as described in US 5,482,792.

The cell was operated at the same conditions as illustrated in Example 1, substantially obtaining the same performances. Particularly, the voltages of each elementary cells had average values 5 mV higher than those of Example 1. This shows that the complex and expensive cooling system of the prior art permits to obtain just a negligible improvement with respect to the system of the invention, which clearly provides for really cheaper, lighter and more compact fuel cells.

## Claims

1. A fuel cell comprising at least an elementary cell delimited by two bipolar plates and comprising an ion exchange membrane, two electrodes in intimate contact with said membrane and two gaskets provided with distribution channels, said fuel cell further provided with longitudinal channels for feeding the gases containing hydrogen and oxygen and for releasing the exhausted gases and the produced water and channels for flowing a cooling medium
characterized in that
the bipolar plates are made of a planar sheet provided with holes for feeding the gases containing hydrogen and oxygen to the unitary cells and for removing the exhausted gases and the produced water and windows for the flow of the cooling fluid, said flow being localized in the peripheral area of the bipolar plates.

2. The cell of claim 1 characterized in that the bipolar plates are metallic.

3. The cell of claim 1 characterized in that the peripheral area of the bipolar plates for the cooling liquid flow is limited to two opposed sides.

4. The cell of claim 1 characterized in that the peripheral area of the bipolar plates is provided with undulations or fins to increase the heat exchange.

5. The cell of claim 1 characterized in that the bipolar plates have a thermal conductivity higher than 100 Watt/meter centigrade.

6. The cell of claim 1 characterized in that the bipolar plates are made of aluminum or its alloys.

7. The cell of claim 1 characterized in that each elementary cell further comprises two porous and conductive current collectors provided with asperities.

8. The cell of claim 1 characterized in that the cooling fluid consists of demi water, low viscosity organic liquids, air.

9. A method for producing the bipolar plates of the fuel cell of the preceding claims characterized in that it consists of cutting a sheet or strip by means of a suitable tool in a single step.
